(19) Europäisches Patentamt
European Patent Office
Office européen des brevets

(11) **EP 3 852 024 A1**

(12) **EUROPEAN PATENT APPLICATION**

(43) Date of publication:
**21.07.2021 Bulletin 2021/29**

(51) Int Cl.:
***G06N 20/00*** *(2019.01)* ***G06N 5/00*** *(2006.01)*

(21) Application number: **20214577.7**

(22) Date of filing: **16.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.01.2020 JP 2020005975**

(71) Applicant: **FUJITSU LIMITED**
**Kanagawa 211-8588 (JP)**

(72) Inventor: **Ohori, Ryuichi**
**Kanagawa, 211-8588 (JP)**

(74) Representative: **Hoffmann Eitle**
**Patent- und Rechtsanwälte PartmbB**
**Arabellastraße 30**
**81925 München (DE)**

# (54) INFORMATION PROCESSING APPARATUS, INFORMATION PROCESSING METHOD, AND INFORMATION PROCESSING PROGRAM

(57) An information processing apparatus includes a learning processing unit configured to execute learning using a plurality of hyper parameters, an evaluation value calculation unit configured to calculate an evaluation value representing an evaluation of a learning result for each of the plurality of hyper parameters by the learning, an approximate expression generation unit configured to repeat processing for generating an approximate expression representing a relationship between the plurality of hyper parameters and the evaluation values and regenerating an approximate expression using the evaluation values from which an abnormal evaluation value determined as an abnormal value based on the generated approximate expression is excluded until the abnormal evaluation value does not exist to generate a convergence approximate expression, and a decision unit configured to decide an optimal value of each of the plurality of hyper parameters based on the generated convergence approximate expression by the approximate expression generation unit.

FIG. 1

2
EXTERNAL APPARATUS
1
INFORMATION PROCESSING APPARATUS
17
STORAGE UNIT
11
INFORMATION OBTAINING UNIT
171
LEARNING DATA
12
LEARNING PROCESSING UNIT
172
EVALUATION DATA
13
EVALUATION VALUE CALCULATION UNIT
173
EVALUATION VALUE
174
HYPER PARAMETER
14
APPROXIMATE EXPRESSION GENERATION UNIT
15
DETERMINATION UNIT
16
DECISION UNIT

EP 3 852 024 A1

## Description

[Technical Field]

The embodiments discussed herein are related to an information processing apparatus, an information processing method, and an information processing program.

[Background Art]

In recent years, effectiveness of machine learning has been confirmed in many fields. The machine learning refers to that, from data, a model representing a relationship between the data is created. In more detail, an appropriate model type set as a target of learning is assigned, and a model parameter is decided by a learning algorithm to perform the machine learning.

For example, for a specific data group, the machine learning may be used to obtain a feature of the specific data group. For example, when the machine learning is executed using a data group assigned to a model type representing a mixture Gaussian distribution, the mixture Gaussian distribution adapted to the assigned data group may be obtained.

In the machine learning, a hyper parameter for controlling a learning process itself is assigned from the outside. The assignment from the outside herein refers to that an appropriate value decided by a person, a random value chosen by a computer, or a predetermined value is assigned. The hyper parameter for controlling the learning is assigned from the outside, but an appropriate method for the assignment is not yet clear.

For example, a method of assigning the hyper parameter includes a method of using a default value or a random value which is disclosed in Chio, C., D. (2018), Machine Learning and Security: Protecting System with Data and Algorithms. Sebastopol, CA. A method of actually training the model using the assigned hyper parameter and adjusting the hyper parameter in accordance with a result has also been proposed. However, this method is inefficient since the method relies on a manual process of trial and error.

In view of the above, a technology has been proposed where learning is performed on each of a plurality of assigned hyper parameter values, and the hyper parameter offering the best result is selected. However, in this method, a hyper parameter other than the optimal hyper parameter may be selected depending on a type of learning. For example, when randomness exists in the learning itself and deterioration of the results randomly occurs relying on an initial state or the like, a bad result may appear even when the best hyper parameter is actually used. In this case, a parameter other than the best hyper parameter may be selected as the best hyper parameter. In this aspect, the randomness of the results may be reduced when the learning is repeated using the same hyper parameter, but more learning processes increase loads on an operator and a computer, and it is difficult to select the best hyper parameter.

In view of the above, a method of approximating a relationship between hyper parameter values and evaluation values by a relational expression, and adopting a hyper parameter value for maximizing the approximate expression exists. The evaluation value refers to a value representing how much the result is close to a value considered to be correct.

A method of deciding the hyper parameter includes the following related-art technologies. For example, a related-art technology exists where learning is performed while a relationship between the hyper parameters and the learning results is represented by a function, and a range that a peak value of a particular hyper parameter when another hyper parameter is changed may take in the function is used as a value range of the particular hyper parameter. Another related-art technology exists where learning is performed twice using a particular size as a size of training data used for the learning, and the learning is repeated by changing a hyper parameter and the size based on a relationship between a sum of indices on which the loads in the two learning processes are reflected and a threshold.

[Citation List]

[Patent Literature]

[PTL 1] Japanese Laid-open Patent Publication No. 2018-159992
[PTL 2] Japanese Laid-open Patent Publication No. 2019-079214

[Summary of Invention]

[Technical Problem]

However, according to the method of adopting the hyper parameter for maximizing the approximate expression, when random deterioration of evaluations is large, it may be difficult to select the best hyper parameter since an accurate approximate expression is not obtained because of large influences from the large random deterioration. For example, an approximate expression having no maximum value because of the influences from the random deterioration of the evaluations may be obtained in some cases, and it is difficult to select the best hyper parameter in such an approximate expression.

According to the related-art technology where the value range of the hyper parameter is limited to the range that the peak value may take too, the appropriate peak value is not obtained in some cases because of the influences from the random deterioration of the evaluations, and it is difficult to select the best hyper parameter. According to the related-art technology for deciding the hyper parameter and the size of the training data from the learning load too, because of the influences from the random deterioration of the evaluations, it is difficult to select the best hyper parameter. In this manner, when the learning is performed without using the appropriate hyper parameter, it is difficult to improve the learning accuracy.

The technique of the present disclosure is devised in consideration of the above-mentioned circumstances, and provides an information processing apparatus, an information processing method, and an information processing program.

[Solution to Problem]

According to one aspect of an information processing apparatus, an information processing method, and an information processing program disclosed in the present application, a learning processing unit executes learning using a plurality of assigned hyper parameters. An evaluation value calculation unit calculates an evaluation value representing an evaluation of a learning result for each of the hyper parameters by the learning processing unit. An approximate expression generation unit repeats processing for generating an approximate expression representing a relationship between the hyper parameters and the evaluation values, and regenerating an approximate expression by using the evaluation values from which an abnormal evaluation value determined as an abnormal value based on the generated approximate expression is removed until the abnormal evaluation value does not exist to generate a convergence approximate expression. A decision unit decides an optimal value of the hyper parameters based on the generated convergence approximate expression by the approximate expression generation unit.

[Advantageous Effects of Invention]

From one aspect, the present invention may improve learning accuracy.

[Brief Description of Drawings]

FIG. 1 is a block diagram of an information processing apparatus according to an embodiment.
FIG. 2 is a diagram for describing a processing flow up to an evaluation value calculation.
FIG. 3 is a diagram representing a relationship between hyper parameters and evaluation values in learning resulting in no random variables.
FIG. 4 is a diagram representing a relationship between hyper parameters and evaluation values in learning resulting in random variables.
FIG. 5 is a diagram representing an approximate expression before convergence.
FIG. 6 is a diagram representing an approximate expression after convergence.
FIG. 7 is a flowchart of hyper parameter selection processing.
FIG. 8 is a hardware configuration of the information processing apparatus.

[Description of Embodiments]

Hereinafter, an embodiment of an information processing apparatus, an information processing method, an information processing program disclosed in this application will be described in detail with reference to the drawings. The information processing apparatus, the information processing method, and the information processing program disclosed in this application are not limited by the following embodiment.

[Embodiment]

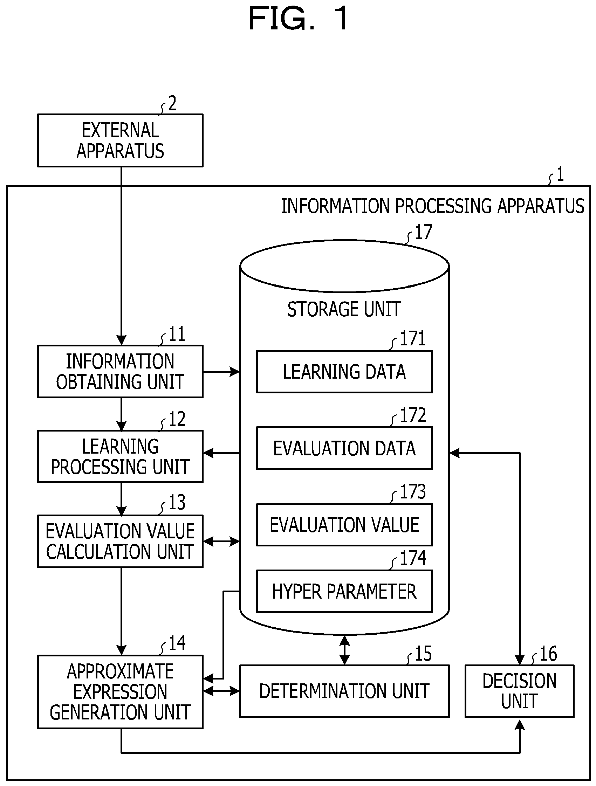

FIG. 1 is a block diagram of an information processing apparatus according to an embodiment. An information processing apparatus 1 is coupled to an external apparatus 2. As illustrated in FIG. 1, the information processing apparatus 1 includes an information obtaining unit 11, a learning processing unit 12, an evaluation value calculation unit 13, an approximate expression generation unit 14, a determination unit 15, a decision unit 16, and a storage unit 17.

The storage unit 17 is a storage device that stores various data. The storage unit 17 previously stores learning data 171 and evaluation data 172.

The information obtaining unit 11 receives inputs of hyper parameters 174 from the external apparatus 2. The number of types of the hyper parameters 174 may be decided according to a model used for the learning, and may be one or more. When plural types of the hyper parameters 174 are used, the information obtaining unit 11 obtains plural pieces of information of a pair of the hyper parameters 174 including values of the hyper parameters 174 for the respective types. When a single type of the hyper parameter 174 is used, the information obtaining unit 11 obtains plural pieces of values of the single hyper parameter 174. Hereinafter, the pair of the hyper parameters 174 when the plural types of the hyper parameters 174 are used is also simply referred to as the hyper parameter 174.

The information obtaining unit 11 stores the obtained hyper parameters 174 in the storage unit 17. Thereafter, the information obtaining unit 11 notifies the learning processing unit 12 of the obtainment of the hyper parameters 174 and instructs to execute the learning.

The learning processing unit 12 receives the notification of the obtainment of the hyper parameters 174 from the information obtaining unit 11. When the instruction to execute the learning is received, the learning processing unit 12 obtains the learning data 171 and the hyper parameters 174 from the storage unit 17.

The learning processing unit 12 executes machine learning on the models using the respective hyper parameters 174 by using the learning data 171, and obtains model parameters for the respective models. The learning processing unit 12 generates a completed model using the obtained model parameters. The learning processing unit 12 generates the models for the respective hyper parameters 174. The learning processing unit 12 outputs the generated models for the respective hyper parameters 174 to the evaluation value calculation unit 13.

For example, machine learning for learning a relationship R between inputs and outputs when a known input is set as X and an output is set as Y is described as an example. In this case, the relationship R is unknown. A model family in this case is set as M represented by the following Expression 1. The model family refers to a set of respective models when different hyper parameters 174 are assigned.

[Expression 1]

$$M \subset Y^X := \{f: X \to Y\} \quad \cdots (1)$$

In this case, the learning processing unit 12 executes learning T defined by the following Expression 2. Where H denotes a set of the hyper parameters 174.

[Expression 2]

$$T: (X \times Y)^* \to H \to M \quad \cdots (2)$$

For example, a case is described where an element of a pair of the input data X and the output data Y represented in the following Expression 3 is represented by data Dt, and any of hyper parameters h included in H serving as the set of the hyper parameters 174 is used.

[Expression 3]

$$D_t \in (X \times Y)^*$$
$$h \in H \quad \cdots (3)$$
$$\mathrm{m}(\in M): X \to Y$$

The learning processing unit 12 obtains the relationship R for obtaining the input data X and the output data Y using the data Dt and the hyper parameters h by a model m serving as an element of the model family M. When the aforementioned processing is performed, the learning processing unit 12 executes the learning T represented by Expression 2. Thus, the learning processing unit 12 learns the relationship R by the learning T.

However, when the learning is randomly performed, for example, when a result is obtained depending on an initial state that is randomly generated, the learning T results in random variables. In this case, the learning processing unit 12 obtains a stochastically deteriorating result as the result of the learning T. When an inappropriate learning result is used, it is difficult to obtain an output appropriate to the input.

The evaluation value calculation unit 13 receives inputs of the models for the respective hyper parameters 174 from the learning processing unit 12. The evaluation value calculation unit 13 obtains the evaluation data 172 from the storage unit 17. The evaluation value calculation unit 13 uses the evaluation data 172 for the models corresponding to the respective hyper parameters 174, and calculates evaluation values 173 corresponding to the respective hyper parameters 174. For example, in the case of supervised learning, the evaluation value calculation unit 13 sets an accuracy representing a difference between the value output to the input and a value in teacher data as the evaluation value 173. In the case of unsupervised learning, the evaluation value calculation unit 13 sets a log likelihood calculated using Akaike's Information Criterion (AIC) as the evaluation value 173. When Akaike's Information Criterion is used, the evaluation value calculation unit 13 assigns a penalty according to the number of model parameters to obtain the log likelihood.

When machine learning is performed, a model more relevant to the used learning data 171 may be generated as the model is more complex with more model parameters. In this case however, there is a fear that over-adaptation to the used learning data 171 may be generated, and this may not be a model appropriate to general data. Since the probability for improving the learning accuracy to the general data is higher as the model is simpler with fewer parameters, the evaluation value calculation unit 13 assigns the penalty according to the number of model parameters, and calculates the log likelihood such that the simpler model with as few parameters as possible is selected.

For example, the evaluation is defined as the following Expression 4. Where E denotes an evaluation. Double-struck R denotes an evaluation result.

[Expression 4]

$$E: (X \times Y)^* \to M \to \mathbb{R} \quad \cdots (4)$$

In this case, the evaluation value calculation unit 13 uses the data Dv serving as the element of the pair of the input data X and the output data Y represented in the following Expression 5 as the evaluation data 172 to the respective models m included in the generated model family M to perform the evaluation. The evaluation value calculation unit 13 obtains the respective evaluation values 173 representing differences between the respective models m included in the model family M and plausible learning results.

[Expression 5]

$$D_v \in (X \times Y)^* \quad \cdots (5)$$

It may be considered that the hyper parameter 174 having the evaluation value 173 that is as good as possible is the appropriate hyper parameter 174. For example, when the result is better as the evaluation value 173 is higher, the evaluation value 173 is preferably set to be higher.

The evaluation value calculation unit 13 stores the evaluation values 173 corresponding to the obtained respective hyper parameters 174 in the storage unit 17. The evaluation value calculation unit 13 outputs the evaluation values 173 corresponding to the respective hyper parameters 174 to the approximate expression generation unit 14.

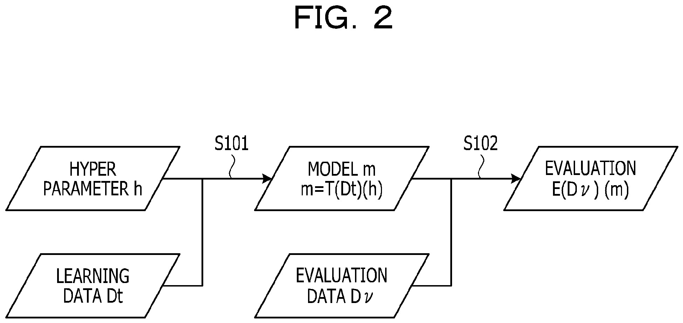

FIG. 2 is a diagram for describing a processing flow up to an evaluation value calculation. With reference to FIG. 2, a processing flow from the learning by the learning processing unit 12 up to the evaluation by the evaluation value calculation unit 13 is collectively described.

The learning processing unit 12 executes the learning T and generates the model m using the hyper parameter h represented in Expression (3) and the data Dt serving as the learning data 171 (step S101). The learning T using the hyper parameter h and the data Dt serving as the learning data 171 is represented as T(Dt)(h).

Thereafter, the evaluation value calculation unit 13 executes the evaluation E represented in Expression 4 on the generated model m using the data Dv serving as the evaluation data 172 (step S102). The evaluation E on the generated model m using the data Dv is represented as E(Dv)(m).

When the learning T results in the random variables, and the learning processing unit 12 obtains a stochastically deteriorating result as the result of the learning T, if the evaluation E is performed using the deteriorating result, the evaluation result also deteriorates. For example, the evaluation value calculation unit 13 obtains the evaluation value including the stochastically deteriorating value.

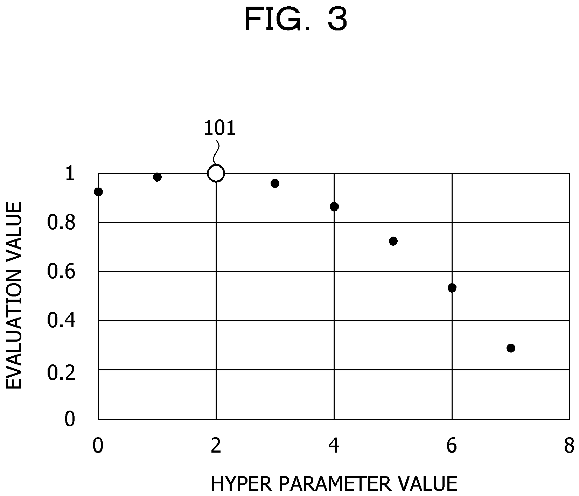

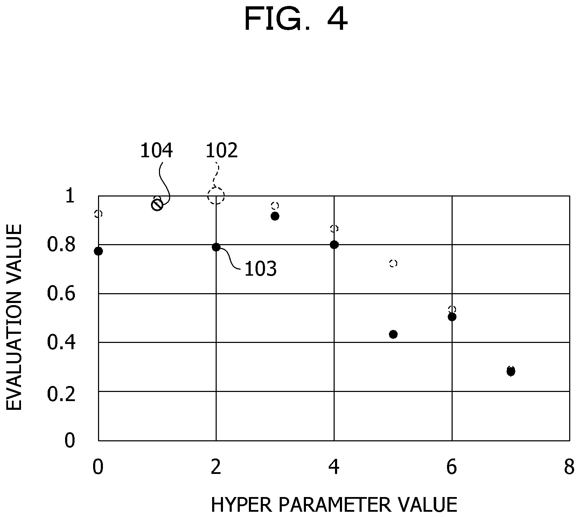

The random deterioration of the evaluation value is described with reference to FIG. 3 and FIG. 4. FIG. 3 is a diagram representing a relationship between hyper parameters and evaluation values in learning resulting in no random variables. FIG. 4 is a diagram representing a relationship between hyper parameters and evaluation values in learning resulting in random variables. In both FIG. 3 and FIG. 4, the horizontal axis represents a value of the hyper parameter 174, and the vertical axis represents an evaluation value. FIG. 3 and FIG. 4 are drawings where the evaluation value further improves as the evaluation value is at an upper point on the vertical axis. Hereinafter, the value of the hyper parameter 174 may be referred to as a "hyper parameter value" in some cases.

When the learning in no random variables, no random deterioration occurs in the evaluation, and evaluation values appropriate to respective parameter values are obtained. In this case, as illustrated in FIG. 3, the hyper parameter value at a point 101 having the best evaluation value is set as the best hyper parameter 174.

On the other hand, when the learning in random variables, random deterioration occurs in the evaluation, and evaluation values for respective hyper parameter values are obtained as illustrated in FIG. 4. In this case, an appropriate evaluation value when the hyper parameter value corresponding to a point 103 is used is set as a value represented at a point 102. For example, it is considered that the evaluation value represented at the point 103 deteriorates since the learning in random variables. For this reason, the point 102 normally has the best evaluation value, but in FIG. 4, the point 104 has the best evaluation value. In this case, the hyper parameter value corresponding to the point 104 is the appropriate hyper parameter 174 instead of the hyper parameter value corresponding to the point 102. In this manner, there is a fear that a hyper parameter other than the hyper parameter 174 actually having the best evaluation value is selected as the appropriate hyper parameter 174. In view of the above, the selection of the hyper parameter 174 using the approximate expression is performed.

Returning to FIG. 1, the description is continued. The approximate expression generation unit 14 receives inputs of the evaluation values 173 from the evaluation value calculation unit 13. The approximate expression generation unit 14 obtains the respective hyper parameters 174 corresponding to the respective evaluation values 173 from the storage unit 17. The approximate expression generation unit 14 approximates a relationship between the values of the hyper parameters 174 and the evaluation values by a relational expression using a least-square method or the like, and obtains an approximate expression representing the relationship between the values of the hyper parameters 174 and the evaluation values.

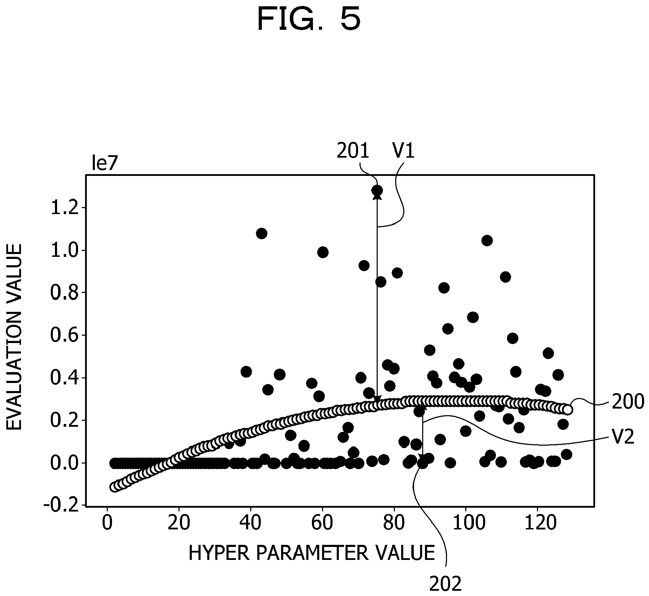

With reference to FIG. 5, the approximate expression when the evaluation values randomly deteriorate is described. FIG. 5 is a diagram representing an approximate expression before convergence. In FIG. 5, the horizontal axis represents the value of the hyper parameter 174, and the vertical axis represents the evaluation value 173. FIG. 5 represents that the evaluation value further improves as the point progresses downwards facing the paper surface on the vertical axis. Respective points plotted in FIG. 5 are points representing the evaluation values 173 corresponding to the hyper parameters 174 when the evaluation values 173 randomly deteriorate. In this case, a point at a lower position facing the paper surface of FIG. 5 has an improved evaluation. An approximate expression 200 is an expression obtained by approximating the relational expression representing the relationship of the respective points. Among the respective points illustrated in FIG. 5, a point largely deviating from the approximate expression 200 like a point 202 also exists. This point largely deviating from the approximate expression is a point generated by the random deterioration of the evaluation value 173. When no random deterioration of the evaluation value 173 occurs, in actuality, a line linking points aligned in a downward direction facing the paper surface of FIG. 5 is thought to be an approximate expression. However, the approximate expression 200 is a curved line where it is difficult to select a maximum value because of the influences from the random deterioration of the evaluation value 173. In view of the above, the approximate expression 200 from which the influences from the random deterioration of the evaluation value 173 are excluded is preferably obtained.

In view of the above, to exclude the randomly deteriorating evaluation value 173, the approximate expression generation unit 14 outputs the obtained approximate expression to the determination unit 15. Thereafter, when an input of information of the evaluation values 173 and the hyper parameters 174 that are excluded is received from the determination unit 15, the approximate expression generation unit 14 obtains the approximate expression using the evaluation values 173 and the hyper parameters 174 from which the evaluation values 173 and the hyper parameters 174 that are notified of are excluded. When a notification of approximate expression convergence is received from the determination unit 15, the approximate expression generation unit 14 notifies the decision unit 16 of the approximate expression. This convergent approximate expression is an example of a "convergence approximate expression".

The determination unit 15 receives an input of the approximate expression representing the relationship between the values of the hyper parameters 174 and the evaluation values from the approximate expression generation unit 14. Next, the determination unit 15 obtains the evaluation values 173 from the storage unit 17. The determination unit 15 determines whether or not the evaluation value 173 that is a value with the worse evaluation than that of the value of the approximate expression and also is largely deviating from the approximate expression exists among the obtained evaluation values 173.

When the evaluation value 173 that is the value with the worse evaluation than that of the value of the approximate expression and also is largely deviating from the approximate expression exists among the obtained evaluation values 173, the determination unit 15 sets the evaluation value 173 as an abnormal value. Being largely deviating refers, for example, to a state where a distance from the approximate expression on a coordinate plane representing the relationship between the hyper parameters 174 and the evaluation values 173 is equal to or higher than a predetermined threshold. The determination unit 15 deletes the evaluation value 173 having the abnormal value and the hyper parameter 174 corresponding to the evaluation value 173 from the storage unit 17. The determination unit 15 instructs the approximate expression generation unit 14 to regenerate the approximate expression. The evaluation value 173 that is the value with the worse evaluation than that of the value of the approximate expression and also is largely deviating from the approximate expression is an example of an "abnormal evaluation value".

On the other hand, when the evaluation value 173 that is the value with the worse evaluation than that of the value of the approximate expression and also is largely deviating from the approximate expression does not exist among the obtained evaluation values 173, for example, when all the evaluation values 173 are normal values, the determination unit 15 notifies the approximate expression generation unit 14 of the convergence of the approximate expression.

An example of exclusion processing of this evaluation value 173 is described. The determination unit 15 obtains an evaluation value $y_a$ satisfying the following Expression 6. Where $y_a$ in Expression 6 is the evaluation value 173 set as the exclusion target, and $f(x_a)$ is an evaluation value obtained by assigning the hyper parameter 174 corresponding to $y_a$ to the approximate expression. A right side in Expression 6 represents a value obtained by inverting a sign of a minimum value of differences between the respective evaluation values 173 and the evaluation values obtained by assigning the corresponding hyper parameters 174. The right side of Expression 6 is an example of a threshold.

[Expression 6]

$$y_a - f(x_a) > -\min_i\{y_i - f(x_i)\} \quad \cdots (6)$$

With reference to FIG. 5, an example of the aforementioned exclusion processing of the evaluation value 173 is described. For example, the description is provided when a point 201 in FIG. 5 is the point to be excluded. The evaluation value 173 corresponding to the point 201 is relevant to $y_a$ in Expression 6. A left side in Expression 6 is relevant to a difference V1. A point 202 is a point farthest from the approximate expression 200 in a direction where the evaluation value improves. A value obtained by subtracting the evaluation value obtained by assigning the hyper parameter 174 corresponding to the evaluation value from respective evaluation values 173 at the point 202 is a minimum value among values obtained by subtracting corresponding approximate expression values from the respective evaluation values. For example, an absolute value of the right side in Expression 6 is relevant to a difference V2. The evaluation value 173 where the difference V1 is deviating more than or equal to the difference V2 is set as a point largely deviating from the approximate expression 200. The point with the worse evaluation than that of the approximate expression such as the point 201, and the point 202 exist in opposite directions while the approximate expression 200 is sandwiched. For this reason, the value obtained by subtracting the value of the approximate expression 200 from the evaluation value 173 of the point with the bad result such as the point 201 has an opposite sign to that of the value obtained by subtracting the value of the approximate expression 200 from the evaluation value 173 instead of the approximate expression 200 of the point 202. In view of the above, as in Expression 6, when the point with the worse evaluation than the approximate expression 200 where the difference more than or equal to the one obtained by inverting the sign of the value obtained by subtracting the value of the approximate expression 200 from the evaluation value 173 of the point 202 exists is extracted, the point largely deviating from the approximate expression 200 in the direction in which the evaluation deteriorates is extracted.

The evaluation value 173 has an upper limit when machine learning is performed by a procedure for searching for an optimal value when a model parameter is selected as in an expectation-maximization method or the like. In the case of the aforementioned machine learning, the appropriate evaluation value 173 approaches the upper limit in some cases, but the evaluation value 173 is not largely deviating in a randomly improving direction. The largely deviating evaluation value 173 is thought to be based on the influences from the random deterioration because the learning in random variables. For example, there is a possibility that the point with the best evaluation value 173 is the appropriate evaluation value. For this reason, since the probability is high that a fluctuation in the appropriate evaluation values 173 occurs in a distance to the best point, the determination unit 15 according to the present embodiment excludes the point with the bad evaluation at the location farther away or equal to this as the point generated by the random deterioration.

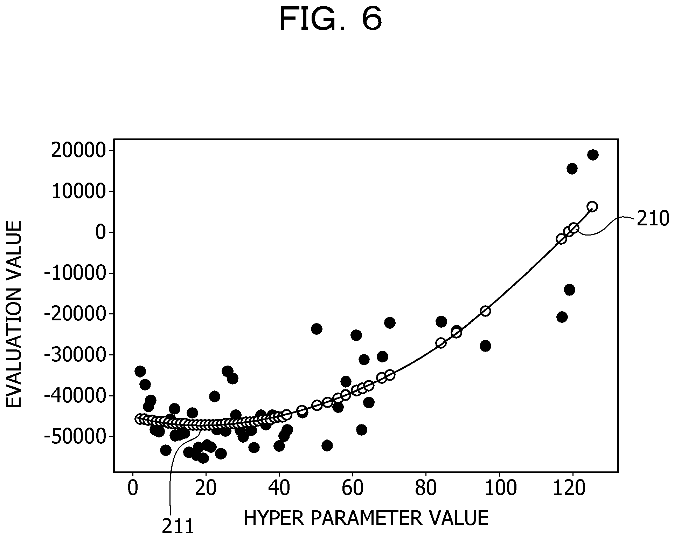

FIG. 6 is a diagram representing an approximate expression after convergence. In FIG. 6, the horizontal axis represents the value of the hyper parameter 174, and the vertical axis represents the evaluation value 173. FIG. 6 represents that the evaluation value further improves as the point progresses downwards facing the paper surface on the vertical axis. However, an order of the vertical axis in FIG. 5 is 10 to the 7th power, but an order of the vertical axis in FIG. 6 is 10 to the 4th power. For example, FIG. 6 is a diagram expanding a lower part in FIG. 5. An approximate expression 210 is a convergent approximate expression by excluding the points corresponding to the randomly deteriorating evaluation value 173 from the respective points in FIG. 5 and repeating the approximation.

A point 211 taking an extremal value in the approximate expression 210 is a point with the best evaluation value 173, for example, a point for maximizing the approximate expression 210. Therefore, the optimal value of the hyper parameters 174 may be selected from the convergent approximate expression 210.

Returning to FIG. 1, the description is continued. The decision unit 16 receives an input of the convergent approximate expression from the approximate expression generation unit 14. The decision unit 16 obtains the hyper parameter 174 for maximizing the obtained approximate expression from the hyper parameters 174 stored in the storage unit 17. The decision unit 16 decides the obtained hyper parameter 174 as the optimal value. For example, when the approximate expression 210 of FIG. 6 is used, the decision unit 16 sets the value of the hyper parameter 174 at the point 211 taking the extremal value as the optimal value. In this manner, the decision unit 16 may select the optimal hyper parameter 174 using the convergent approximate expression.

The decision unit 16 outputs the hyper parameter 174 set as the optimal value. According to the present embodiment, the decision unit 16 stores the hyper parameter 174 set as the optimal value in the storage unit 17. Thus, the learning processing unit 12 may obtain the hyper parameter 174 turning to the optimal value in the learning performed later from the storage unit 17 and execute the learning.

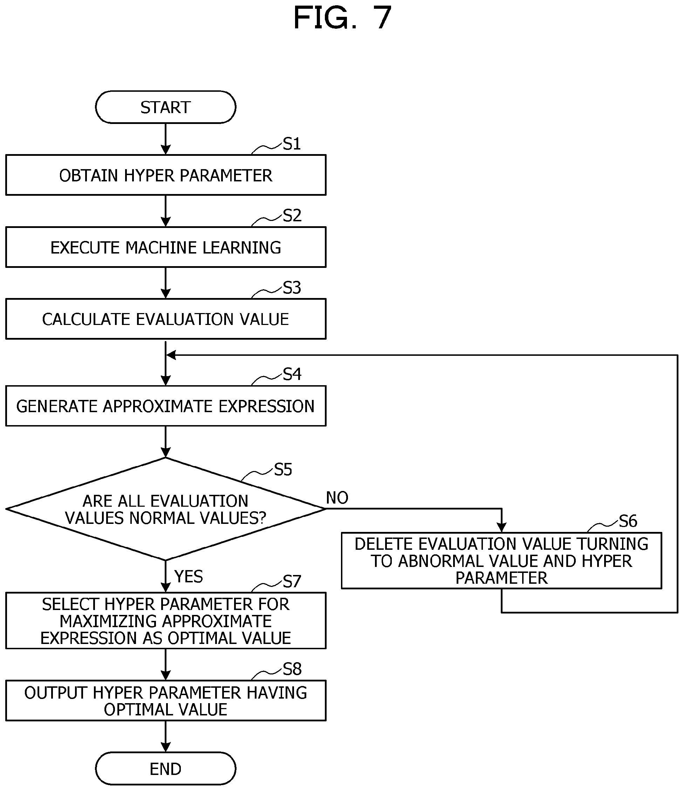

Next, a flow of selection processing of the hyper parameter is described with reference to FIG. 7. FIG. 7 is a flowchart of the selection processing of the hyper parameter.

The information obtaining unit 11 obtains the hyper parameter 174 from the external apparatus 20 (step S1). The information obtaining unit 11 stores the obtained hyper parameters 174 in the storage unit 17. The information obtaining unit 11 outputs the hyper parameter 174 to the learning processing unit 12 to instruct to execute the learning.

The learning processing unit 12 receives the input of the hyper parameter 174 from the information obtaining unit 11. When the instruction to execute the learning is received, the learning processing unit 12 obtains the learning data 171 from the storage unit 17. The learning processing unit 12 executes the machine learning using the learning data 171 and the hyper parameter 174 (step S2). The learning processing unit 12 obtains the model parameter for each of the hyper parameters 174 by the machine learning. The learning processing unit 12 generates the model for each of the hyper parameters 174 using the obtained model parameter. Thereafter, the learning processing unit 12 outputs each of the generated models to the evaluation value calculation unit 13.

The evaluation value calculation unit 13 receives inputs of the models obtained by the machine learning from the learning processing unit 12. The evaluation value calculation unit 13 obtains the evaluation data 172 from the storage unit 17. The evaluation value calculation unit 13 performs the evaluation on each model for each of the hyper parameters 174 using the evaluation data 172, and calculates the evaluation value 173 for each of the hyper parameters 174 (step S3). Thereafter, the evaluation value calculation unit 13 stores the calculated evaluation value 173 in the storage unit 17. The evaluation value calculation unit 13 instructs the approximate expression generation unit 14 to generate the approximate expression.

When the instruction to generate the approximate expression is received from evaluation value calculation unit 13, the approximate expression generation unit 14 obtains the respective hyper parameters 174 from the storage unit 17. The approximate expression generation unit 14 approximates the relationship between the values of the hyper parameters 174 and the evaluation values 173 using the relational expression, and generates the approximate expression representing the relationship between the values of the hyper parameters 174 and the evaluation values 173 (step S4). Next, the approximate expression generation unit 14 outputs the generated approximate expression to the determination unit 15.

The determination unit 15 receives the input of the approximate expression from the approximate expression generation unit 14. The determination unit 15 determines whether or not all the evaluation values 173 are normal values (step S5). The determination unit 15 determines whether or not the evaluation value 173 deviating from the approximate value in the direction in which the evaluation deteriorates by more than a threshold exists.

When the evaluation value 173 turning into an abnormal value exists (step S5: No), the determination unit 15 deletes a pair including the evaluation value 173 turning into the abnormal value among pairs of the hyper parameters 174 and the evaluation values 173 from the storage unit 17 (step S6). The determination unit 15 deletes the pair deviating from the approximate expression in the direction in which the evaluation deteriorates by more than the threshold. The determination unit 15 requests the approximate expression generation unit 14 to generate the approximate expression. Thereafter, the processing returns to step S4.

On the other hand, when all the evaluation values 173 are normal values (step S5: Yes), the determination unit 15 notifies the approximate expression generation unit 14 of the convergence completion of the approximate expression. When the notification of the convergence completion of the approximate expression is received, the approximate expression generation unit 14 outputs the convergent approximate expression to the decision unit 16. The decision unit 16 selects the hyper parameter 174 for maximizing the obtained approximate expression as the optimal value (step S7).

Thereafter, the decision unit 16 outputs the lowest one of the known hyper parameters 174 (step S8) to be stored, for example, in the storage unit 17 or the like.

The decision processing of the hyper parameter by the information processing apparatus 1 according to the present embodiment is described when a mixture Gaussian distribution is used as a model family used in the machine learning. In the case of the mixture Gaussian distribution, the hyper parameter 174 is a mixture number of a Gaussian distribution. In the case of the mixture Gaussian distribution, the model parameters are an average, a variance, and a weight.

The information obtaining unit 11 obtains a plurality of mixture numbers serving as the hyper parameters 174.

The learning processing unit 12 executes the machine learning using the learning data 171 on the mixture Gaussian distribution with regard to each mixture number, and obtains the average, the variance, and the weight serving as the model parameters. The mixture Gaussian distribution having the obtained average, variance, and weight is generated for each mixture number. The evaluation value calculation unit 13 obtains the evaluation value 173 based on Akaike's Information Criterion (AIC) using the evaluation data 172 on the mixture Gaussian distribution corresponding to each mixture number generated by the learning processing unit 12.

The approximate expression generation unit 14 generates the approximate expression representing the relationship between the mixture numbers and the evaluation values 173. The determination unit 15 sets, as an abnormal value, the evaluation value 173 deviating from the approximate expression in the direction in which the evaluation deteriorates by more than a threshold, and excludes the evaluation value 173 as the abnormal value and the mixture number corresponding to the abnormal value the element of the approximate expression. The approximate expression generation unit 14 uses the data from which the evaluation value 173 as the abnormal value and the mixture number corresponding to the abnormal value are excluded, and then regenerates the approximate expression. The approximate expression generation unit 14 and the determination unit 15 repeat the generation processing of the approximate expression until the evaluation values 173 turn to normal values and converge. The decision unit 16 obtains the optimal value of the mixture numbers using the approximate expression representing the relationship between the convergent mixture numbers and the evaluation values 173. Thus, an appropriate value is obtained as a mixture number of a mixture Gaussian function used when the learning is performed using the data corresponding to the learning data 171.

The learning processing unit 12 may obtain the model parameters such as the appropriate average, variance, and weight by executing the machine learning using the mixture Gaussian function having the mixture number. Therefore, the learning processing unit 12 may obtain the mixture Gaussian function accurately adapted to the assigned data group by using the obtained average, variance, and weight. For example, the information processing apparatus 1 may be improve the learning accuracy.

As described above, the information processing apparatus according to the present embodiment repeats the processing for obtaining the approximate expression representing the relationship between the hyper parameter and the evaluation value, and generating the approximate expression by excluding the evaluation value determined as the abnormal value and the hyper parameter based on the obtained approximate expression. When the evaluation value determined as the abnormal value disappears, the information processing apparatus obtains the appropriate value of the hyper parameter using the approximate expression. Thus, the influences from the randomly deteriorating evaluation values when the learning in the random variables may be reduced, and the appropriate hyper parameter may be easily selected. When the appropriate hyper parameter is used, the learning accuracy may be improved.

(Hardware Configuration)

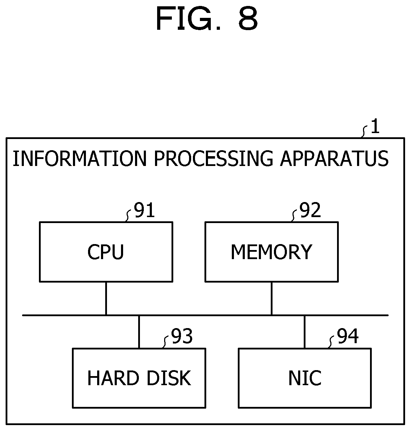

FIG. 8 is a hardware configuration diagram of the information processing apparatus. The information processing apparatus 10 according to the present embodiment includes a central processing unit (CPU) 91, a memory 92, a hard disk 93, and a network interface card (NIC) 94. The CPU 91 is coupled to the memory 92, the hard disk 93, and the NIC 94 by a bus.

For example, the NIC 94 is a communication interface with the external apparatus 20. The information obtaining unit 11 communicates with the external apparatus 20 via the NIC 94.

The hard disk 93 realizes a function of the storage unit 17 in FIG. 1. The hard disk 93 stores various programs including programs for realizing the functions of the information obtaining unit 11, the learning processing unit 12, the evaluation value calculation unit 13, the approximate expression generation unit 14, the determination unit 15, and the decision unit 16 exemplified in FIG. 1.

The CPU 91 reads the various programs from the hard disk 93, develops the programs in the memory 92, and executes the programs to realize the functions of the information obtaining unit 11, the learning processing unit 12, the evaluation value calculation unit 13, the approximate expression generation unit 14, the determination unit 15, and the decision unit 16 exemplified in FIG. 1.

## Claims

**1.** An information processing apparatus comprising:

a learning processing unit configured to execute learning using a plurality of hyper parameters;
an evaluation value calculation unit configured to calculate an evaluation value representing an evaluation of a learning result for each of the plurality of hyper parameters by the learning;
an approximate expression generation unit configured to repeat processing for generating an approximate expression representing a relationship between the plurality of hyper parameters and the evaluation values and regenerating an approximate expression using the evaluation values from which an abnormal evaluation value determined as an abnormal value based on the generated approximate expression is excluded until the abnormal evaluation value does not exist to generate a convergence approximate expression; and
a decision unit configured to decide an optimal value of each of the plurality of hyper parameters based on the generated convergence approximate expression by the approximate expression generation unit.

**2.** The information processing apparatus according to claim 1, wherein the approximate expression generation unit is further configured to:

decide the abnormal evaluation value based on the approximate expression,
exclude the abnormal evaluation value from the evaluation values, and
regenerate an approximate expression using the evaluation values from which the abnormal evaluation value is excluded.

**3.** The information processing apparatus according to claim 1 or 2, wherein
for the abnormal evaluation value, the evaluation value that is farther from the approximate expression in a direction in which the evaluation deteriorates by more than a threshold on a coordinate plane representing a relationship between the hyper parameters and the evaluation values is decided as the abnormal value.

**4.** The information processing apparatus according to claim 3,
wherein the threshold is a distance from the approximate expression to the evaluation value that is the farthest in a direction in which the evaluation improves.

**5.** An information processing method comprising:

executing learning using a plurality of hyper parameters;
calculating an evaluation value representing an evaluation of a learning result for each of the plurality of hyper parameters by the learning;
repeating processing for generating an approximate expression representing a relationship between the plurality of hyper parameters and the evaluation values and regenerating an approximate expression using the evaluation values from which an abnormal evaluation value determined as an abnormal value based on the generated approximate expression is excluded until the abnormal evaluation value does not exist to generate a convergence approximate expression; and
deciding an optimal value of each of the plurality of hyper parameters based on the generated convergence approximate expression.

**6.** The information processing method according to claim 5, wherein the repeating includes:

deciding the abnormal evaluation value based on the approximate expression,
excluding the abnormal evaluation value from the evaluation values, and
regenerating an approximate expression using the evaluation values from which the abnormal evaluation value is excluded.

**7.** An information processing program that causes an information processing apparatus to execute a process, the process comprising:

executing learning using a plurality of hyper parameters;
calculating an evaluation value representing an evaluation of a learning result for each of the plurality of hyper parameters by the learning;
repeating processing for generating an approximate expression representing a relationship between the plurality of hyper parameters and the evaluation values and regenerating an approximate expression using the evaluation values from which an abnormal evaluation value determined as an abnormal value based on the generated approximate expression is excluded until the abnormal evaluation value does not exist to generate a convergence approximate expression; and
deciding an optimal value of each of the plurality of hyper parameters based on the generated convergence approximate expression.

**8.** The information processing method according to claim 7, wherein the repeating includes:

deciding the abnormal evaluation value based on the approximate expression;
excluding the abnormal evaluation value from the evaluation values; and
regenerating an approximate expression using the evaluation values from which the abnormal evaluation value is excluded.

FIG. 1

2
EXTERNAL APPARATUS
1
INFORMATION PROCESSING APPARATUS
17
STORAGE UNIT
171
LEARNING DATA
172
EVALUATION DATA
173
EVALUATION VALUE
174
HYPER PARAMETER
11
INFORMATION OBTAINING UNIT
12
LEARNING PROCESSING UNIT
13
EVALUATION VALUE CALCULATION UNIT
14
APPROXIMATE EXPRESSION GENERATION UNIT
15
DETERMINATION UNIT
16
DECISION UNIT

FIG. 2

HYPER PARAMETER h
S101
MODEL m
m=T(Dt)(h)
S102
EVALUATION
E(Dν) (m)
LEARNING DATA Dt
EVALUATION DATA Dν

FIG. 3

101
1
0.8
0.6
0.4
0.2
0
EVALUATION VALUE
0
2
4
6
8
HYPER PARAMETER VALUE

# FIG. 4

104
102
103
1
0.8
0.6
0.4
0.2
0
0
2
4
6
8
EVALUATION VALUE
HYPER PARAMETER VALUE

# FIG. 5

201
V1
le7
1.2
1.0
0.8
0.6
0.4
0.2
0.0
-0.2
EVALUATION VALUE
0
20
40
60
80
100
120
HYPER PARAMETER VALUE
200
V2
202

# FIG. 6

20000
10000
0
-10000
-20000
-30000
-40000
-50000
EVALUATION VALUE
0
20
40
60
80
100
120
HYPER PARAMETER VALUE
210
211

FIG. 7

START
S1
OBTAIN HYPER PARAMETER
S2
EXECUTE MACHINE LEARNING
S3
CALCULATE EVALUATION VALUE
S4
GENERATE APPROXIMATE EXPRESSION
S5
ARE ALL EVALUATION VALUES NORMAL VALUES?
NO
S6
DELETE EVALUATION VALUE TURNING TO ABNORMAL VALUE AND HYPER PARAMETER
YES
S7
SELECT HYPER PARAMETER FOR MAXIMIZING APPROXIMATE EXPRESSION AS OPTIMAL VALUE
S8
OUTPUT HYPER PARAMETER HAVING OPTIMAL VALUE
END

FIG. 8

1
INFORMATION PROCESSING APPARATUS
91
CPU
92
MEMORY
93
HARD DISK
94
NIC

Europäisches Patentamt
European Patent Office
Office européen des brevets

# EUROPEAN SEARCH REPORT

Application Number
EP 20 21 4577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/095819 A1 (VARADARAJAN VENKATANATHAN [US] ET AL) 28 March 2019 (2019-03-28) * paragraph [0030] - paragraph [0091] * * figure 3 * ----- | 1-8 | INV. G06N20/00 G06N5/00 |
| A | MOTULSKY HARVEY J ET AL: "Detecting outliers when fitting data with nonlinear regression - a new method based on robust nonlinear regression and the false discovery rate", BMC BIOINFORMATICS, BIOMED CENTRAL , LONDON, GB, vol. 7, no. 1, 9 March 2006 (2006-03-09), page 123, XP021013626, ISSN: 1471-2105, DOI: 10.1186/1471-2105-7-123 * page 1 - page 3 * ----- | 1-8 | |

TECHNICAL FIELDS SEARCHED (IPC)

G06N

The present search report has been drawn up for all claims

| Place of search | Date of completion of the search | Examiner |
|---|---|---|
| The Hague | 26 May 2021 | Bohn, Patrice |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 20 21 4577

This annex lists the patent family members relating to the patent documents cited in the above-mentioned European search report. The members are as contained in the European Patent Office EDP file on
The European Patent Office is in no way liable for these particulars which are merely given for the purpose of information.

26-05-2021

| Patent document cited in search report | Publication date | Patent family member(s) | Publication date |
|---|---|---|---|
| US 2019095819 A1 | 28-03-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018159992 A
- JP 2019079214 A


### Non-patent literature cited in the description


- **CHIO, C., D.** *Machine Learning and Security: Protecting System with Data and Algorithms,* 2018